# EUROPEAN PATENT APPLICATION

(11) **EP 1 510 333 A1**
(43) Date of publication of application: **02.03.2005**
(21) Application number: 04104111.2
(22) Date of filing: 26.08.2004
(51) Int. Cl.: B32B 1/00, B23K 20/10, B23K 26/00, B23K 1/00

(54) **Method of forming multi-metallic articles from multi-metallic sheets**

(30) Priority: 27.08.2003 US 648804
(71) Applicant: DANA CORPORATION, Toledo, OH 43615 (US)
(72) Inventor: Kiehl, Mark W., Bernville, PA Pennsylvania 19506 (US)
(74) Representative: Jorio, Paolo, Dr. Ing.

(57) **Abstract**

Disclosed is an improved method of creating an article from a multi-metallic sheet blank. Differing metallic sheet components are first separately fabricated, followed by joining of the differing metallic blanks into a contiguous whole using pulse welding, weldbrazing, laser welding, or the like. The multi-metallic blank is then formed, as a whole, to a final shape desired shape for incorporation into an article.

## Description

### Field of the Invention

The invention relates to the field of forming multi-metallic articles and more specifically forming articles from multi-metallic sheet blanks created especially to create the specified article.

### Background of the Invention

The trend in vehicle design is towards greater efficiency. This trend is evident in the many and varied attempts to reduce vehicle weight, fuel consumption, use of road space, parking, and materials, all-the-while maintaining vehicle appeal, sturdiness, crashworthiness, and familiar operating characteristics. These trends have led to hybrid-technologies, extensive use of lightweight materials (plastics, high-strength alloys, composites), high capacity electronic and electrical systems, and wind tunnel developed exterior shapes.

In the areas of crashworthiness and overall vehicle sturdiness, the use of lightweight high strength materials has become commonplace. However, the uses of these materials have, for the most part to date, been reserved for high priced vehicles. Luxury cars and expensive sports cars and other relatively costly vehicles have enjoyed certain advantages owing to their capacity to absorb the higher manufacturing costs into their pricing. Lower priced vehicles, however, that make up the much larger majority of vehicles used in the world, have not been able to make as much use of light weight relatively high-tech materials as have the more costly vehicles. The reasons for this are related to the costs of incorporating the materials into the manufacturing process.

It is known, for example, to combine tubes comprising differing types of steel into a single vehicle component. In this known use of multi-metallic components, hydro-formed tubes comprised of differing types of compatible steels (high strength low alloy, galvanized steel, and plain carbon steel) are used. There also exists other known uses of tubes made of dis-similar metal types first connected end-to-end and thereafter subject to forming as a composite tube through bending and/or hydro-forming. It is also known to form frame elements for vehicles using dis-similar metallic members joined together.

### Summary of the Invention

The present invention is directed to simplifying the process for making multi-metallic articles in general. According to the present invention, multi-metallic sheets are first fabricated and thereafter formed into a final component. Specifically, sheet blanks of the desired metals are first fabricated using conventionally the most cost effective methods to create such blanks. Secondly, the blanks are joined, again using the most cost effective techniques, to form a multi-metallic blank of the desired multi-metallic composition and orientation. Thirdly, the multi-metallic blank is rolled and/or otherwise formed into a shape suitable for hydro-forming and/or other bending process or stamping process into a suitable shape for an article designed as a component element being created. The resulting multi-metallic article, whether used in a vehicle, article of furniture, pipe element, etc, can take full advantage of the respective performance characteristics of the various metallic elements in that specific application.

### Brief Description of the Drawings

Fig. 1 shows a flow chart specifying the steps of the present method.
Fig. 2 shows a multi-metallic blank used to create a component having differing metals along a length of the final component.
Fig. 3 shows an article created using the multi-metallic blank shown in Fig. 2. having differing metals along its length.
Fig. 4 shows a multi-metallic blank used to create a component having differing metals along both its length and perimeter when formed thereafter into a final component.
Fig. 5 shows an article created using the multi-metallic blank shown in Fig. 4 having differing metals along its length, perimeter, and end sections.

### Detailed Descriptior of a Preferred Embodiment

The present invention is directed to a method of efficiently fabricating a multi-metallic blank for later forming into a multi-metallic component having desired strength, stiffness, crush, and other performance characteristics. The method includes joining metallic sheets of differing composition, i.e., aluminum, steel, stainless steel, magnesium, using known processes such as pulse welding, laser welding, and weldbrazing, to fabricate multi-metallic sheet blanks that are then formed, as a whole, into multi-metallic components. Owing to the multi-metallic blank joining and orientation of the specified metallic sheets, the final multi-metallic component may have differing metallic surfaces along either or both its length and/or perimeter and/or ends. For example, vehicle elements that, along a certain length, need to perform as stiff, non-deflecting mounting elements for suspension and/or engine/drive train components can be a specified alloy of a certain type. In contrast, a vehicle component that is supporting seating, fluid transfer, duct work, or is specified as crash energy absorbing, can be comprised of a lighter differing metal that serves that role most efficiently. These multi-metallic features can be side-to-side with an eventual upwardlyor inwardly directed surface of the component having one selected metal specified and an opposing outwardly or downwardly directed surface, for example, having another metal specified. By varying the metallic material in increments along the component length and/or perimeter, unique stiffness, mass, crush, and performance characteristics are obtained.

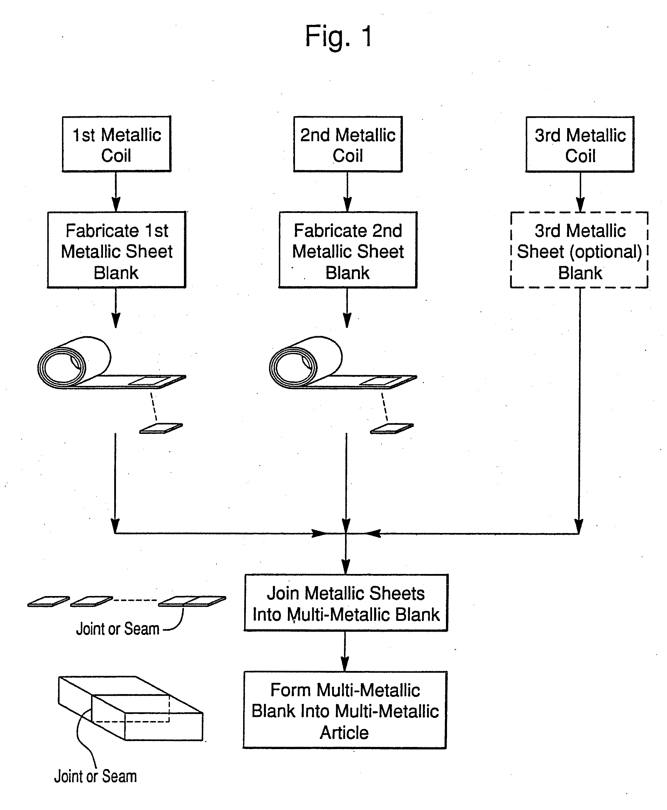

The method, as shown in Fig. 1, first involves the step of fabricating metallic sheet blanks of the desired metallic specification. These sheets can be comprised of varying metals of differing types and/or thicknesses and/or performance characteristics, i.e., stainless steel of various specification and strength, aluminum and magnesium likewise specified according to design and performance requirements, and at varying thicknesses. The metallic sheets blanks are then arranged to be joined in a specified orientation according to the performance requirements of the final component. Following fabrication, the multi-metallic blank is then formed by any suitable combination of hydroforming, stamping, roll forming, or stretch forming to create a desired shape for the specified component, i.e., a vehicle frame member, cross member, floor, suspension or drive train element, chair seat/legs, cabinet portion, industrial railing, refrigeration unit frame/housing element, etc. By using the present method whereby sheet components are joined one to the other to initially create a multi-metallic blank, the most efficient and simplest methods of magnetic pulse welding, laser welding, or weldbrazing can be implemented with access to opposed surfaces of the differing metallic sheet elements.

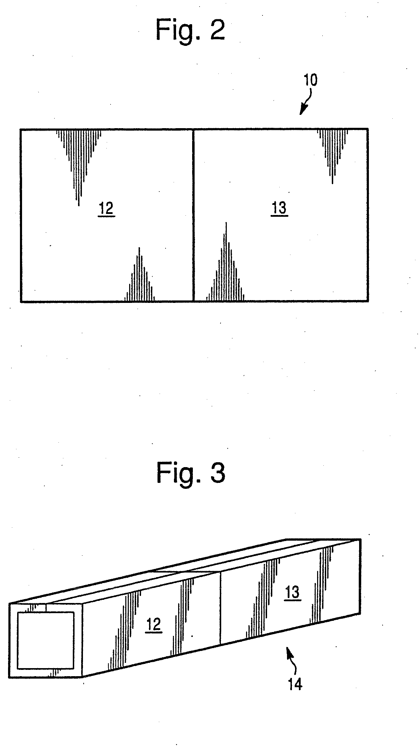

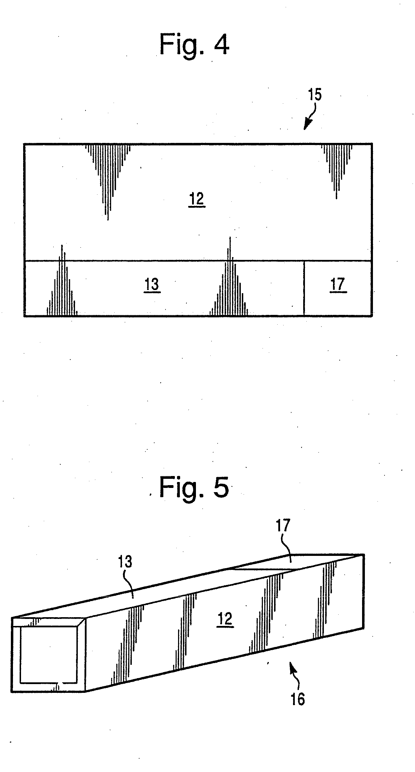

The respective multi-metallic sheet blanks 10 and 15 as shown in Figs. 2 and 4 include differing metallic materials 12, 13, and 17, as specified according to the performance requirements of the final articles. The final articles 14 and 16 position the selected material(s) according to a specified placement. For example, a steel element 17 is positioned along a rectangular tube form 16 to a specified location for attachment to a vehicle suspension mount.

It is anticipated that more expansive characterizations of overall usefulness, application, and design factors, will be apparent to one of ordinary skill in the field of metallic article design upon a reading of this specification. The multi-metallic sheets described herein may readily be implemented in a variety of design applications and strength, weight, corrosion resistance, etc, may be optimized accordingly. As such, this invention is not to be limited except as by the appended claims.

## Claims

1. A method of creating a multi-metallic article, comprising the steps of:
providing a first metallic sheet member from a first metal,
providing a second metallic sheet member from a second metal differing in type from said first metal,
securing said first metallic sheet member to said second metallic sheet member to create a multi-metallic sheet blank,
forming said multi-metallic sheet blank into a multi-metallic article.

2. A method as in claim 1, further comprising the steps of:
providing a third metallic sheet from a third metal differing from said first and second metals,
securing said third metallic sheet to said multi-metallic sheet blank prior to forming said multi-metallic sheet blank into a multi-metallic article.

3. A method as in claim 1, wherein:
said securing step uses magnetic pulse welding to secure said first metallic sheet to said second metallic sheet.

4. A method as in claim 1, wherein:
said securing step uses laser welding to secure said first metallic sheet to said second metallic sheet.

5. A method as in claim 1, wherein:
said securing step uses weldbrazing to secure said first metallic sheet to said second metallic sheet.

6. A method as in claim 1, wherein:
said multi-metallic article is formed so as to have said first and second differing metals oriented along its length.

7. A method as in claim 1, wherein:
said multi-metallic article is formed so as to have said first and second differing metals oriented around its perimeter.

8. A method of creating a multi-metallic vehicle component, comprising the steps of:
providing a first metallic sheet member from a first metal,
providing a second metallic sheet member from a second metal differing in type from said first metal,
securing said first metallic sheet member to said second metallic sheet member to create a multi-metallic sheet blank,
forming said multi-metallic sheet blank into a multi-metallic vehicle component.

9. A method as in claim 8, further comprising the steps of:
providing a third metallic sheet from a third metal differing from said first and second metals,
securing said third metallic sheet to said multi-metallic sheet blank prior to forming said multi-metallic sheet blank into a multi-metallic vehicle component.

10. A method as in claim 8, wherein:
said securing step uses magnetic pulse welding to secure said first metallic sheet to said second metallic sheet.

11. A method as in claim 8, wherein:
said securing step uses laser welding to secure said first metallic sheet to said second metallic sheet.

12. A method as in claim 8, wherein:
said securing step uses weldbrazing to secure said first metallic sheet to said second metallic sheet.

13. A method as in claim 8, wherein:
said multi-metallic component is formed so as to have said first and second differing metals oriented along its length.

14. A method as in claim 8, wherein:
said multi-metallic component is formed so as to have said first and second differing metals oriented around its perimeter.

15. A method as in claim 13, wherein:
said component is a vehicle frame element.

16. A method as in claim 14, wherein:
said component is a vehicle frame element.
